# EUROPEAN PATENT APPLICATION

(11) **EP 2 665 259 A1**
(43) Date of publication of application: **20.11.2013**
(21) Application number: 13167968.0
(22) Date of filing: 16.05.2013
(51) Int. Cl.: H04N 5/783, G11B 27/00, H04N 9/82, G11B 27/10

(54) **Recording medium, reproducing device for performing trick play for data of the recording medium, and method thereof**

(30) Priority: 17.05.2012 US 201261648184 P; 04.04.2013 KR 20130036928
(71) Applicant: Samsung Electronics Co., Ltd, Gyeonggi-do 443-742 (KR); Gangneung-Wonju National University Industry Academy Cooperation Group, Gangneung-si, Gangwon 210-702 (KR)
(72) Inventor: Jang, Yong-seok, Hwaseong-si Gyeonggi-do (KR); Park, Sung-wook, Gangneung-si Gangwon-do (KR); Park, Hong-seok, Ansan-si Gyeonggi-do (KR); Kim, Min-seok, Suwon-si Gyeonggi-do (KR); Bak, Bong-gil, Suwon-si, Gyeonggi-do (KR); Yang, Jong-ho, Yongin-si Gyeonggi-do (KR); Lee, Jae-jun, Suwon-si, Gyeonggi-do (KR)
(74) Representative: Clark, David James

(57) **Abstract**

Provided is a recording medium reproducing device including a driver configured to load a recording medium storing video data, including a plurality of video frames, and additional information about the plurality of video frames included in a plurality of layers, respectively, when the recording medium is loaded therein; a user interface configured to receive a trick play command; a video processor which processes the video data; and a controller configured to select at least one layer to be decoded from among the plurality of layers based on a trick play speed determined according to the trick play command and the additional information, control the video processor to decode video frames of the selected layer, and performs a trick play corresponding to the trick play speed using the decoded video frames.

## Description

### BACKGROUND

### Field

Apparatuses and methods consistent with the exemplary embodiments relate to a recording medium, and a recording medium reproducing device and method for performing a trick play for data recorded on the recording medium, and more particularly, to a recording medium on which video data and additional information regarding a plurality of frames classified in units of layers are recorded, and a recording medium reproducing device and method for performing a trick play for the video data of the recording medium based on the additional information.

### 2. Description of the Related Art

With advancement in electronic technologies, various types of electronic devices have been developed and come into widespread use. Also, the sizes of contents that electronic devices can process have been greatly increased according to user needs for various contents. Specifically, a large amount of contents, such as various three-dimensional (3D) contents or ultra-high definition (UHD) contents, have also been used.

Such contents may be recorded and provided via various recording media. When a recording medium is loaded in a recording medium reproducing device, the recording medium reproducing device is capable of reproducing and outputting data stored in the recording medium. Examples of the recording medium may include a Blu-ray disc, digital versatile disc (DVD), a compact disc (CD), etc.

Such a recording medium reproducing device is capable of not only performing normal video reproduction but also performing a trick play function of reproducing a video at a high speed in a forward or backward direction for convenience of users.

However, a data structure for a trick play has not been defined in a related art. Accordingly, the playback speed of the trick play cannot finely or precisely be controlled.

### SUMMARY

One or more exemplary embodiments of the inventive concept overcome the above disadvantages and other disadvantages not described above. Also, the one or more exemplary embodiments are not required to overcome the disadvantages described above, and may not overcome any of the problems described above.

One or more exemplary embodiments provide a recording medium reproducing device and method for precisely and finely performing a trick play by classifying frames in units of layers and providing additional information regarding the frames.

According to an aspect of an exemplary embodiment, a recording medium reproducing device includes a driver configured to load a recording medium storing video data, including a plurality of video frames, and additional information about the plurality of video frames included in a plurality of layers, respectively, when the recording medium is loaded therein; a user interface configured to receive a trick play command; a video processor which processes the video data; and a controller configured to select at least one layer to be decoded from among the plurality of layers based on a trick play speed determined according to the trick play command and the additional information, control the video processor to decode video frames of the selected layer, and performs a trick play corresponding to the trick play speed using the decoded video frames.

The plurality of video frames are included in a first layer including at least one intra (I) frame and at least one predicted (P) frame, a second layer including at least one bidirectional reference (Br) frame that is a bidirectional (B) frame referred to by another B frame in coding or decoding, and a third layer including at least one B frame which is not a Br frame.

The plurality of video frames are included in a first layer including at least one intra (I) frame and at least one predicted (P) frame, a second layer including another at least one P frame, and a third layer including at least one B frame.

The additional information comprises information about a structure of video frames included in a group of pictures (GOP), coding information comprising information about the plurality of layers, and offset information indicating a location of the video frames to be decoded by the video processor in the plurality of video frames.

The recording medium may be a Blu-ray disc. The video data may be encoded using a high efficiency video coding (HEVC) and then be recorded on the Blu-ray disc. The controller may detect the additional information from at least one of stream information and random access point information included in clip information recorded on the recording medium.

According to an aspect of another exemplary embodiment, a trick play method performed by a recording medium reproducing device includes loading a recording medium storing video data, including a plurality of video frames, and additional information about the plurality of video frames included in a plurality of layers, respectively, when the recording medium is loaded in a driver; receiving a trick play command; detecting the additional information; selecting at least one layer to be decoded from among the plurality of layers based on a trick play speed determined according to the trick play command and the additional information, and decoding video frames of the selected layer; and performing a trick play corresponding to the trick play speed using the decoded video frames.

The plurality of video frames are included in a first layer including at least one intra (I) frame and at least one predicted (P) frame, a second layer including another at least one P frame, and a third layer including at least one B frame.

The plurality of frames may be classified into a first layer including an I frame and some P frames, a second layer including the other P frames, and a third layer including B frames.

The additional information comprises information about a structure of video frames included in a GOP, coding information comprising information about the plurality of layers, and offset information indicating a location of the video frames to be decoded by the video processor in the plurality of video frames.

The recording medium may be a Blu-ray disc. The video data may be encoded using the HEVC method and then be recorded on the Blu-ray disc. The controller may detect the additional information from at least one of stream information and random access point information included in clip information recorded on the recording medium.

According to an aspect of another exemplary embodiment, a recording medium includes a first region which stores video data comprising a plurality of frames included in a plurality of layers; and a second region which stores additional information, wherein the additional information comprises information about a structure of video frames included in a GOP, coding information comprising information about the plurality of layers, and offset information indicating a location of a video frame to be decoded.

The plurality of video frames are included in a first layer including at least one intra (I) frame and at least one predicted (P) frame, a second layer including another at least one P frame, and a third layer including at least one B frame.

The additional information comprises information about a structure of video frames included in a GOP, coding information comprising information about the plurality of layers, and offset information indicating a location of the video frames to be decoded by the video processor in the plurality of video frames.

According to an aspect of another exemplary embodiment, a non-transitory computer readable recording medium having recorded thereon a program for performing a trick play method is provided. The trick play method includes receiving a trick play command; detecting additional information from a recording medium which stores video data, comprising a plurality of video frames, and the additional information about the plurality of frames included in a plurality of layers, respectively; selecting at least one layer to be decoded from among the plurality of layers based on a trick play speed determined according to the trick play command and the additional information, and decoding video frames of the selected layer; and performing a trick play corresponding to the trick play speed using the decoded video frames.

The recording medium may be a Blu-ray disc. The video data may be encoded using the HEVC method, and then be recorded on the Blu-ray disc. The additional information may include information about video frames included in a GOP, HEVC information, and offset information.

According to the present invention there is provided an apparatus and method as set forth in the appended claims. Other features of the invention will be apparent from the dependent claims, and the description which follows.

As described above, according to various exemplary embodiments, a recording medium reproducing device may perform a trick play at various playback speeds designated by a user, based on additional information.

Additional and/or other aspects and advantages will be set forth in part in the description which follows and, in part, will be obvious from the description, or may be learned by practice of the inventive concept.

### BRIEF DESCRIPTION OF THE DRAWINGS

The above and/or other aspects will be more apparent by describing certain exemplary embodiments with reference to the accompanying drawings, in which:
FIG. 1 is a block diagram of a recording medium reproducing device according to an exemplary embodiment;
FIG. 2 is a diagram illustrating an example of video frames classified in units of a plurality of layers, according to an exemplary embodiment;
FIG. 3 is a diagram illustrating a process of producing a compressed video stream by coding a video stream using a high-efficiency video coding (HEVC) encoder, according to an exemplary embodiment;
FIG. 4 is a diagram illustrating a process of decoding a video stream compressed using the process of FIG. 3, according to an exemplary embodiment;
FIG. 5 is a table illustrating types of information relating to a trick play that are obtained from additional information, according to an exemplary embodiment;
FIG. 6 is a diagram illustrating a reproducing method using offsets according to playback speeds, according to an exemplary embodiment;
FIG. 7 is a diagram illustrating another example of video frames classified in units of a plurality of layers;
FIG. 8 is a diagram illustrating a method of performing a trick play using video frames such as that shown in FIG. 7, according to an exemplary embodiment;
FIG. 9 is a flowchart illustrating a trick play method according to an exemplary embodiment;
FIG. 10 is a block diagram of a recording medium on which a plurality of pieces of information are recorded according to an exemplary embodiment;
FIG. 11 is a diagram illustrating an example of a data structure of an optical disc storing a video stream;
FIG. 12 is a diagram illustrating an example of a data structure including additional information;
FIG. 13 is a diagram illustrating an example of an information structure representing an offset between frames; and
FIG. 14 is a diagram illustrating an example of a data structure of additional information when information relating to a group of pictures (GOP) continuously changes, according to an exemplary embodiment.

### DETAILED DESCRIPTION OF THE EXEMPLARY EMBODIMENTS

Certain exemplary embodiments will now be described in greater detail with reference to the accompanying drawings.

In the following description, like drawing reference numerals are used for the like elements even in different drawings. The matters defined in the description, such as detailed construction and elements, are provided to assist in a comprehensive understanding of the inventive concept. Thus, it is apparent that the exemplary embodiments of the inventive concept can be carried out without those specifically defined matters. Also, well-known functions or constructions are not described in detail since they would obscure the inventive concept with unnecessary detail.

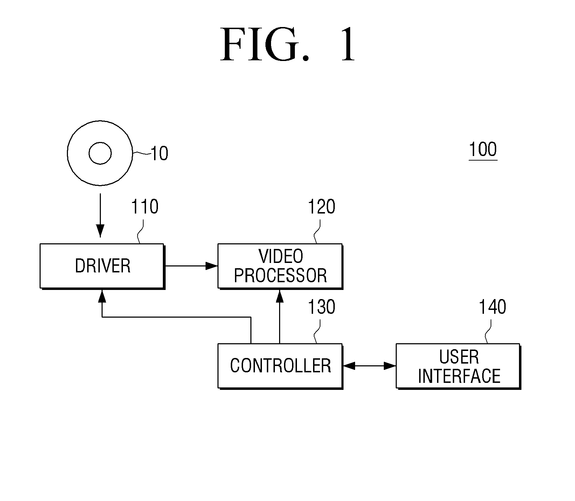

FIG. 1 is a block diagram of a recording medium reproducing device 100 according to an exemplary embodiment. The recording medium reproducing device 100 means a device capable of detecting and reproducing data stored in a recording medium 10.

The recording medium 10 may be any of various types of media such as a Blu-ray disc, a holographic disc, a digital versatile disc (DVD), a compact disc (CD), a universal serial bus (USB) memory stick, an external hard disc, etc. The recording medium reproducing device 100 may be embodied as one independent device as illustrated in FIG. 1 but is not limited thereto. For example, the recording medium reproducing device 100 may be embodied to be loaded in a display device such as a television (TV). In the following embodiments, a device capable of reproducing data from an optical disc such as a Blu-ray disc and providing the reproduced data to a display device will be described as an example of the recording medium reproducing device 100, for convenience of explanation.

Referring to FIG. 1, the recording medium reproducing device 100 includes a driver 110, a video processor 120, a controller 130, and a user interface 140.

The driver 110 is configured to drive the recording medium 10 to detect data stored in the recording medium 10 when the recording medium 10 is loaded therein. When the recording medium reproducing device 100 is embodied as a device for reproducing data from an optical disc such as a Blue-ray disc, the driver 110 may include a tray for loading an optical disc thereon, a motor for rotating the optical disc, a connector connected to a main board to transmit or receive various data, a power connector to which power is supplied from a power supply device, an optical pickup unit for writing a signal to or reading a signal reflected from the optical disc by irradiating laser on the optical disc, an objective lens, a digital signal processor (DSP) for controlling overall operations of the driver 110 and operating the driver 110, a front end processor (FEP) for controlling a laser irradiation operation of the optical pickup unit and interpreting a received signal, etc.

Video data, additional information, etc. regarding a plurality of frames classified in units of layers may be recorded on the recording medium 10 loaded in the driver 110. When the recording medium 10 is loaded in the driver 110, the driver 110 may detect the video data and the additional information from the recording medium 10 by loading the recording medium 10. The detected data may be provided to the video processor 120 or the controller 130. The video data may be encoded according to a high-efficiency video coding (HEVC) method, and recorded on the recording medium 10. The HEVC is a next-generation video coding standard that is under discussion by the joint collaborative team on video coding (JCT-VT), organized by the ISO/IEC moving picture experts group (MPEG) and the ITU-T video coding experts group (VCEG). The compression performance of an image having a size of 8K*4K (7680x4320) when the image is coded using the HEVC is about twice than when the image is coded using the conventional MPEG4-AVC.

A video stream coded using the HEVC includes an intra or intra-coded (I) frame, a predicted (P) frame, a bidirectional (B) frame, etc. The I frame is a key frame that is directly compressed from a source. The I frame may be decoded independently without referring to other frames. The P frame is a frame configured based on information regarding a previous key frame. The B frame is a frame configured based on information regarding previous and subsequent I and P frames. I, P, and B frames included in video data recorded on the recording medium 10 may be classified in units of layers. The layer classification may be determined according to a decoding order. In other words, a frame that may be decoded independently or based on only a minimum number of other frames may be set to be a lower layer, and the other frames may be set to be upper layers. An example of the layer classification will be described in detail below.

The additional information may include a group of pictures (GOP) structure information, HEVC information, offset information, etc. The GOP structure information means information regarding whether a bidirectional reference (Br) frame is present in a GOP, the number of B frames present between adjacent I or P frames, the location of a Br frame among consecutive B frames, etc. The I frame means a frame consisting of only I-slices. The B frame and the Br frame mean frames consisting of only B-slices. The P frame means a frame consisting of only P-slices.

Also, the Br frame represents a B frame that may be referred to by another B frame among B frames decoded by referring to other frames. For convenience of explanation, non-reference B frames except for Br frames will be hereinafter referred to as B frames.

The HEVC information may include temporal identifiers (IDs) for I, P, and B frames, and so on. Temporal IDs may be differently set in units of layers. For example, when the temporal ID of a lowermost layer is 0, the temporal IDs of upper layers may be 1, 2, ..., n, respectively.

The offset information may include information regarding an offset between an I, P, or B frame and a next I, P, or B frame in a decoding order, coding size information regarding I, P, and B frames to be read, etc.

The video processor 120 generates video frames by processing data detected by the driver 110. The video processor 120 may include a demultiplexer for detecting video data, audio data, and additional data relating to contents recorded on the recording medium 10, a video decoder for decoding video data, a scaler; an audio decoder that decodes audio data; a filtering unit for filtering noise; a signal amplifier for amplifying an audio signal; a data decoder for processing additional data; a rendering unit for generating an object based on decoded additional data; a mixer, etc. The video processor 120 may decode data detected by the driver 110 by using a codec corresponding to an encoding method used to encode the data recorded on the recording medium 10. A process of processing audio data is not illustrated in the drawings and is not described in the detailed description herein, for convenience of explanation.

The user interface 140 is configured to receive a trick play command. The trick play command is a command controlling a playback speed at which data stored in the recording medium 10 is to be reproduced. A trick play speed may be determined according to the trick play command. The user interface 140 may be embodied in any of various shapes, e.g., a button, a touch screen, a remote control signal receiver, etc. A user may input a trick play command via the user interface 140 while designating any of various playback speeds, e.g., 2x, 3x, 4x, etc. Specifically, the user interface 140 may differently determine a playback speed according to a number of times a button is selected. For example, the user interface 140 may determine a 2x trick play command when a button matching the trick play command is selected once, determine a 3x trick play command when this button is selected twice, and determine a 4x trick play command when this button is selected three times. Otherwise, a playback speed may be differently determined according to a time period that the button matching the trick play command is pressed. That is, the longer the button is pressed, the higher the playback speed may be set. In addition, different buttons may be set to match playback speeds, and a user interface (UI) screen may be displayed so that a user may select a desired playback speed on the UI screen.

When a trick play command is input to the controller 130, the controller 130 performs a trick play corresponding to a trick play speed determined by the trick play command. Specifically, the controller 130 selects a layer that is to be decoded from a video stream, based on the additional information. Then, the controller 130 controls the video processor 120 to decode video data of the selected layer. When the video data is decoded, the controller 130 performs a trick play corresponding to a trick play speed selected by a user, based on the entire decoded data or a part of the decoded data. If the recording medium reproducing device 100 is embodied as a Blue-ray disc reproducing device, a DVD reproducing device, or the like, the controller 130 selectively outputs frames corresponding to the entire decoded data or a part of the decoded data to an external display device. The external display device receives and displays the frames, thereby performing the trick play.

The recording medium reproducing device 100 may be embodied as a display device including a display unit (not shown). In this case, the controller 130 may perform the trick play by directly outputting selected frames via the display unit.

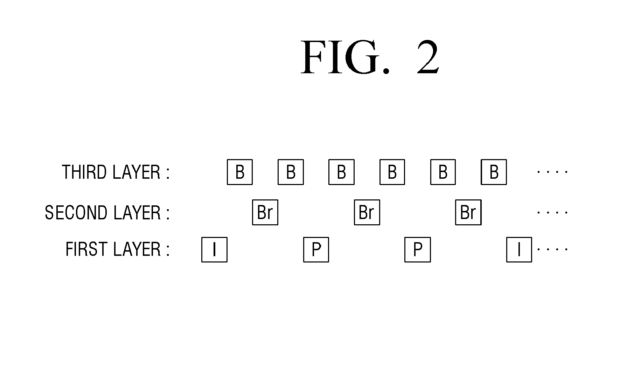

FIG. 2 is a diagram illustrating an example of a hierarchical structure of video data, according to an exemplary embodiment. According to FIG. 2, a plurality of frames may be classified into a first layer including I frames and P frames, a second layer including Br frames that are B frames referred to by other B frames, and a third layer including the other B frames which are not Br frames.

The controller 130 of FIG. 1 checks the shape of a GOP based on GOP structure information included in the additional information. In other words, the controller 130 determines whether Br frames are present, the locations of the Br frames when the Br frames are present, the number of B frames present between adjacent I or P frames, and so on. Also, the controller 130 selects a layer for performing a trick play corresponding to a determined playback speed. For example, referring to FIG. 2, if a user selects a 4x track play when I frames and P frames are arranged at intervals of four frames, the controller 130 may select only the first layer. Thus, when the I frame and the P frame are decoded and output, the 4x trick play may be exactly performed. When a user selects a 2x trick play, the controller 130 may select both the first layer and the second layer. Thus, when all of I, P, and Br frames are decoded and output, the 2x trick play may be performed.

The controller 130 performs a predetermined-speed trick play by combining layers that are to be decoded according to a trick play speed selected by a user and then selectively outputting only a part of frames of the decoded layers. The controller 130 may selectively read, decode, and output only frames needed for a trick play (fast forward or fast reverse), based on the additional information described above. In particular, when video data is reproduced at a 4x speed or more, there may be some frames of the video data that are read and decoded but are not output. The controller 130 may skip reading and decoding by referring to temporal IDs according to a structure of a video stream. Thus, a trick play may be finely performed using P, B, and Br frames that cannot be used as random access points. Also, the controller 130 may detect length information of the I, P, and B frames, based on the offset information of the additional information. Thus, when the trick play is performed, starting points of the I and P frames may be detected using the offset information, and data required to perform the trick play may be read without performing parsing, based on the length information.

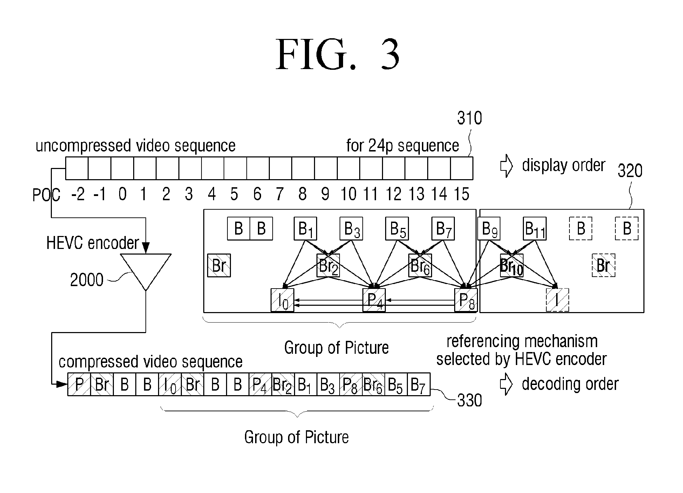

FIG. 3 is a diagram illustrating a process of producing a video stream including the frames of the layers of FIG. 2, according to an exemplary embodiment. Specifically, FIG. 3 illustrates a process of producing a compressed video stream by coding a video stream consisting of 24 frames per second, using a HEVC encoder 2000 according to a progressive manner.

As illustrated in FIG. 3, although video data stored in the recording medium 10 may be coded according to the HEVC standard, the terms defined in the MPEG-2 video coding standard and the MPEG-4 AVC video coding standard will be used together in the present disclosure. For example, '24p' means that a video stream is progressive video including 24 frames, and '48i' means that a video stream is interlaced video including 48 fields.

FIG. 3 illustrates a process of producing a 24p video stream that is to be decoded by a HEVC decoder including a decoded picture buffer (DPB) having a size of 3.

Referring to FIG. 3, an uncompressed video sequence 310 including a plurality of frames arranged in a display order is encoded into a compressed video sequence 330 by the HEVC encoder 2000. In FIG. 3, a picture order count (POC) means an order in which frames of a video sequence are output when the video sequence is reproduced. In FIG. 3, the frames are classified into three layers as illustrated in FIG. 2. That is, the frames are classified into a first layer including I and P frames, a second layer including Br frames, and a third layer including B frames. In a diagram 320 illustrating a frame hierarchical structure, arrows denote referencing; 'I', 'P', and 'B' denote an I frame, a P frame, and a B frame, respectively; and 'Br' denote a B frame that may be referred to. Also, subscripts denote a display order.

Such a video stream may be produced by a content producing device, a transmitting device, etc. Hereinafter, a device for producing a video stream will be referred to as a stream producing device. The stream producing device may set layers of frames in various ways according to exemplary embodiments. Also, the stream producing device may produce a stream to satisfy conditions below:

### <Conditions>

- I and P frames are decoded in an order in which they are displayed;
- If a B frame (i.e., a non-reference B frame) is to be decoded before other B frames, the B frame has been displayed before the other B frames;
- A P frame does not refer to B frames;
- A B frame may refer to either an I or P frame displayed right after or before the B frame, or complementary field pairs of I and P frames. The B frame may also refer to complementary field pairs of Br or B frames between an I frame and a P frame.
- A Br frame (i.e., a reference B frame) may refer to either an I or P frame displayed right before or after the Br frame, or complementary field pairs of I and P pictures. A Br field may refer to another Br field that forms a complementary reference field pair with the Br field itself; and
- The maximum number of consecutive B frames, the maximum number of complementary reference field pairs of B frames, or the maximum number of complementary non-reference field pairs of B frames in a display order is '3'.

The stream producing device including the HEVC encoder 2000 encodes a video according to the conditions described above, and transmits the result of encoding the video. When streams are related to a broadcast program used in a broadcasting system, the GOP structure information and the HEVC information may be maintained with respect to all of the streams and the offset information may be variably transmitted among the additional information described above.

Accordingly, when the recording medium reproducing device 100 capable of receiving a video stream obtains GOP structure information and HEVC information for one video stream and has offset information for each of I or P frames, the recording medium reproducing device 100 may perform a trick play in a forward or backward direction.

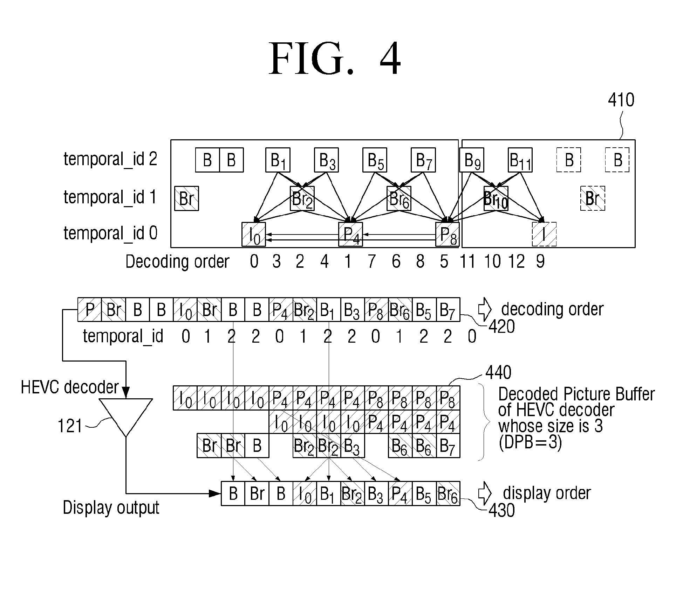

FIG. 4 illustrates a process of decoding a 24p video stream produced as illustrated in FIG. 3 by using a HEVC decoder 121 including a DPB having a size of 3, according to an exemplary embodiment.

Referring to FIG. 4, a video stream 410 including frames classified into three layers is input to the recording medium reproducing device 100 of FIG. 1. Predetermined temporal IDs are set for the three layers, respectively. That is, '0', '1', and '2' may be set as temporal IDs for the first layer, the second layer, and the third layer, respectively. The controller 130 of FIG. 1 may read and decode data of the respective frames of the video stream 410 in a decoding order. In FIG. 4, a second stream 420 denotes the frames arranged in the decoding order. The HEVC decoder 121 included in the video processor 120 sequentially decodes the frames in the decoding order. In this case, the decoded frames are sequentially buffered in a DPB 440 of the HEVC decoder 121. The controller 130 may control the video processor 120 to arrange and output the decoded frames in a display order. In FIG. 4, a last stream 430 denotes a stream arranged in the display order.

When a trick play command is input to the controller 130, the controller 130 may perform a trick play at a playback speed corresponding to the trick play command by reading, decoding, and outputting appropriate frames, based on the additional information described above.

When the stream 410 illustrated in FIG. 4 is input, the additional information may have the following values according to an exemplary embodiment:
1. GOP structure information
   - Whether a Br frame is present in a GOP: YES;
   - The number of B frames present between adjacent I or P frames: 3
   - The location value of a Br picture among consecutive B frames: 2
2. HEVC information
   - Temporal IDs of I and P frames: 0, 0
3. Offset information
   - An offset between an I, P, or B frame and a next I, P, or B frame in a decoding order: offset 1, offset 2, or offset 3
   - Coding size information regarding I, P, and B frames to be read: 1.3 Mbytes (including I and Br frames), 800 Kbytes (including P and Br frames), and 800 Kbytes (including P and Br frames)

The controller 130 may detect the structure of a GOP, based on the GOP structure information, and selectively read, decode, and output at least one layer corresponding to a trick play speed selected by a user, based on the HEVC information and offset information.

The recording medium reproducing device 100 may obtain various information relating to a trick play from the additional information. A GOP may have any of various structures. Thus, a trick play may be performed in various ways according to a structure of a GOP.

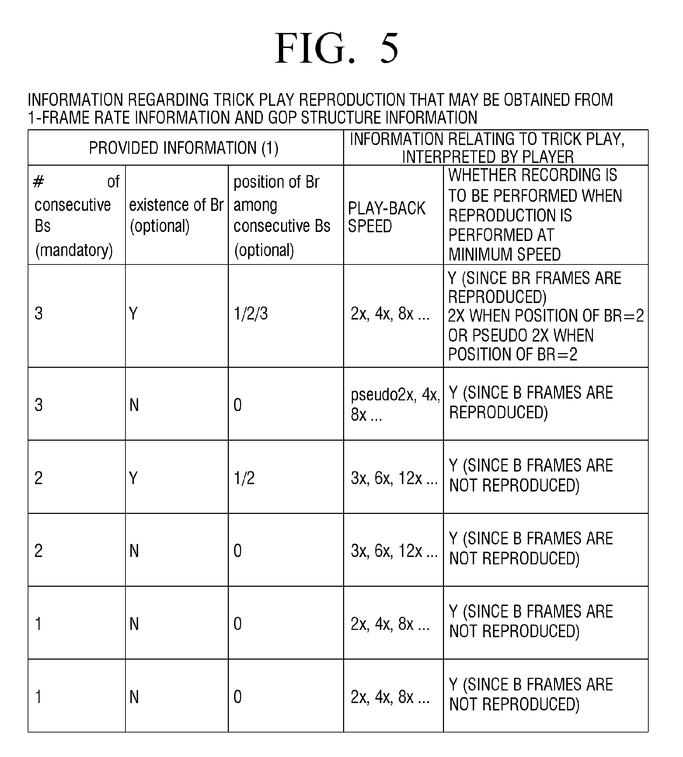

FIG. 5 is a table illustrating various examples of GOP structure information included in additional information, and types of information obtained from the additional information, according to an exemplary embodiment. Referring to FIG. 5, the number of consecutive Br pictures may be any of various numbers, e.g., 1, 2, or 3. Br pictures may also be included or may not be included. Thus, a value indicating whether a Br picture is present in the GOP structure information may be recorded as 'YES' or 'NO'. Furthermore, the location of a Br picture may be variously set.

Based on the GOP structure information, the recording medium reproducing device 100 of FIG. 1 may check playback speeds of a trick play that are supportable, and determine whether reordering should be performed when data is reproduced at a minimum playback speed. The reordering means a work of newly determining a buffering order of a DPB since the decoding order and the display order of data of a recording medium may not be the same.

A playback speed of the trick play may be set variously, e.g., 2x, pseudo 2x, 3x, 4x, 6x, 8x, 12x, 16x, ... as illustrated in FIG. 5. Here, 'pseudo 2x' means a trick play speed that is not exactly 2x but approximates to 2x. That is, when the number of consecutive B frames is '1' or '2', only I and P frames are reproduced. However, when the number of consecutive B frames is '3', P and Br frames are also reproduced. In this case, the trick play speed may be exactly 2x or may be pseudo 2x according to the locations of the Br frames. The recording medium reproducing device 100 may determine whether reordering should be performed, based on whether a B frame or a Br frame is to be reproduced.

As described above, a trick play may be supported in various ways according to the structure of a GOP. The recording medium reproducing device 100 may perform a trick play corresponding to a trick play speed selected by user by selectively outputting data of decoded frames.

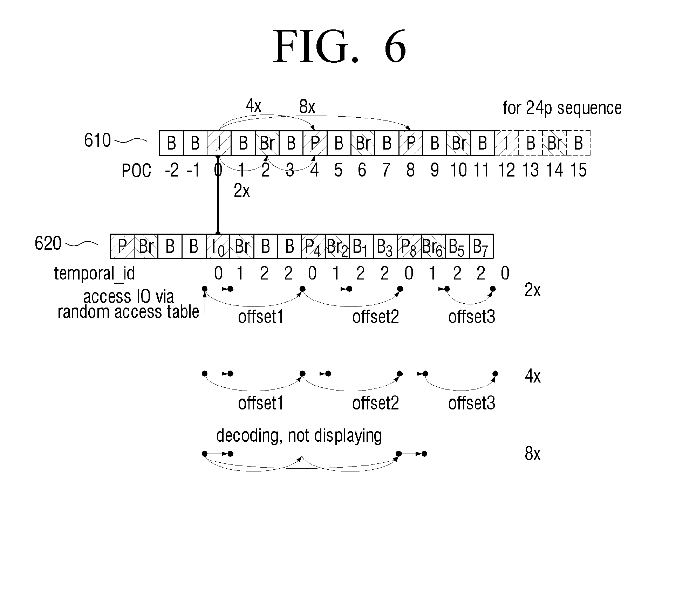

FIG. 6 is a diagram illustrating a method of performing a trick play based on offset information when a 24p video stream is input, according to an exemplary embodiment.

In FIG. 6, a first stream 610 shows a structure of a stream according to a display order, and a second stream 620 shows a structure of a stream according to a decoding order.

According to the first stream 610, when a user selects a 2x playback speed, the controller 130 of FIG. 1 reproduces frames in the order of 10, Br2, P4, Br6, P8, .... In this case, since the Br2 and Br6 frames should be displayed before the P4 and P8 frames, respectively, the video processor 120 of FIG. 1 performs reordering in the DPB included in the HEVC decoder 121. In addition, when reproduction is performed at other high playback speeds, a trick play may be performed by selectively determining frames to be displayed after all of P frames are read and decoded.

Specifically, when a 2x trick play command (fast forward or fast reverse) is input, the recording medium reproducing device 100 of FIG. 1 first reproduces only the I frame 10. Then, reordering is performed by reading each of frames starting from the P frame P4 and the B frame Br2 spaced by an offset '1' from the I frame 10, and then, the B frame Br2 and the P frame P4 are reproduced. Then, the recording medium reproducing device 100 jumps to the location of a next P frame P8 spaced by an (offset 1 + offset 2) from the I frame 10, and reads and reproduces the P frame P8. When a next GOP is input to the recording medium reproducing device 100 while reproducing is performed as described above, the recording medium reproducing device 100 performs reordering by reading an I frame and a B frame, and outputs the B frame and the I frame. The controller 130 repeatedly performs the above operation until a user command instructing to discontinue the trick play is input thereto or until reproduction of a last content is completed.

In the case of a 4x trick play, the recording medium reproducing device 100 first reproduces only the I frame 10. Then, the recording medium reproducing device 100 reads and outputs only the P frame P4 spaced by the offset 1 from the I frame 10. Then, the recording medium reproducing device 100 jumps to the location of the P frame P8 spaced by (offset 1 + offset 2) from the I frame 10. When a next GOP is input to the recording medium reproducing device 100 while the recording medium reproducing device 100 continues data reproduction as described above, the recording medium reproducing device 100 reads and outputs an I frame. The controller 130 repeatedly performs this operation while the trick play is performed.

In the case of an 8x trick play, the recording medium reproducing device 100 first reproduces only the I frame 10. Then, the recording medium reproducing device 100 reads and decodes only the P frame P4 spaced by the offset 1 from the I frame 10, and stores the result of decoding the P frame P4 in the DPB. The video processor 120 decodes and outputs the subsequent P frame P8 by referring to the current P frame P4. Since the playback speed is 8x, the P frame P4 is decoded but is not output. Consequently, since the I frame 10 and the P8 frame P8 are output, the 8x trick play may be performed. The controller 130 repeatedly performs this operation while the trick play is performed. When a frame that is to be output is the I frame 10, the controller 130 does not need to read a current P frame. In this case, the controller 130 skips reading of P frames.

The trick play may be performed at various playback speeds as described above.

When a trick play is performed using only P frames at a playback speed of 4x or more, the trick play may be performed by decoding all of the P frames but some of P frames that do not need to be displayed may not be decoded. Thus, the decoding of the P frames that may not be decoded may be skipped, thereby decreasing a load on the decoder. In this case, the P frames may be classified into a first layer and a second layer.

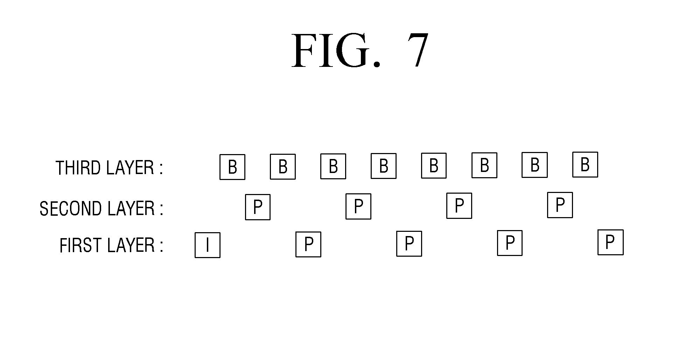

FIG. 7 is a diagram illustrating a hierarchical structure of frames according to another exemplary embodiment. Referring to FIG. 7, a plurality of frames may be classified into a first layer including I frames and some of P frames, a second layer including the other P frames, and a third layer including B frames.

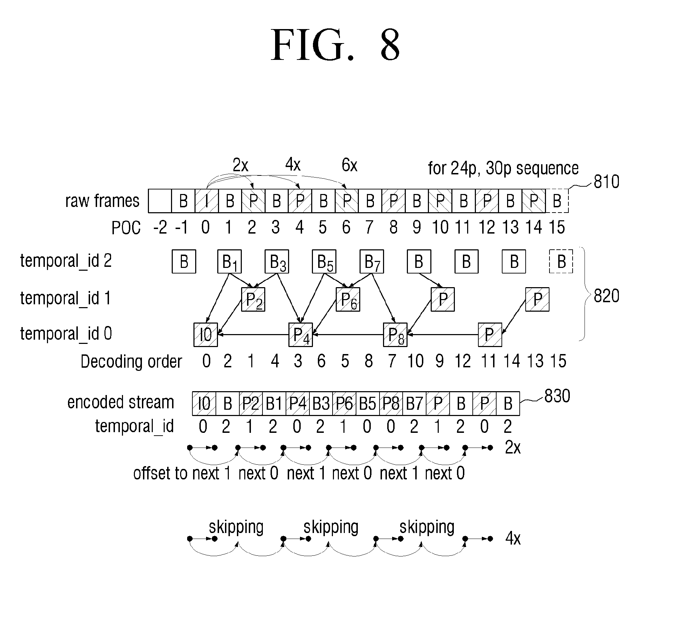

FIG. 8 is a diagram illustrating a method of reproducing a video stream such as that shown in FIG. 7, according to an exemplary embodiment. Specifically, FIG. 8 illustrates a process of performing a trick play for a video stream consisting of 24 or 30 frames per second by using an HEVC decoder including a DPB having a size of 2 according to a progressive manner. The recording medium reproducing device 100 of FIG. 1 may determine whether decoding is to be performed based on HEVC information included in the additional information described above, i.e., temporal IDs.

In FIG. 8, raw frames 810 are arranged in the order of IBPBPBPBPBPBPBPB. According to a hierarchical diagram 820, an 10, P4, P8, and P12 frames are grouped to a first layer (temporal ID: 0), P2, P6, and P10 frames are grouped to a second layer (temporal ID: 1), and B frames are grouped to a third layer (temporal ID: 2). A stream producing device encodes the raw frames 810. Frames of an encoded stream 830 are arranged in the order of 10, B, P2, B1, P4, B3, P6, B5, P8, B7, ....

If reproducing is performed at a playback speed, the recording medium reproducing device 100 may skip a decoding process when the temporal ID of a P frame that does not need to be displayed is greater than the temporal ID of a subsequent P frame. That is, when a trick play is performed at a 4x speed based on the steam of FIG. 8, frames should be output in the order of 10, P4, P8, and P12. The recording medium reproducing device 100 first reads and decodes the 10 frame, and jumps to the location of the subsequent P frame P2 based on offset information. The controller 130 skips decoding of the P2 frame since the temporal ID of the P2 frame is '1' and the temporal ID of the subsequent P frame P4 is '0'. FIG. 8 illustrates a section in which decoding is skipped when a 4x trick play is performed.

Since the trick play performed on the streams of FIG. 8 is similar to that described above with reference to FIG. 6 and is thus not described again here.

As described above, the recording medium reproducing device 100 may perform a trick play at various playback speeds, based on various additional information. Such additional information may be more useful when a video stream is read from an optical disc that is limited in terms of a read speed.

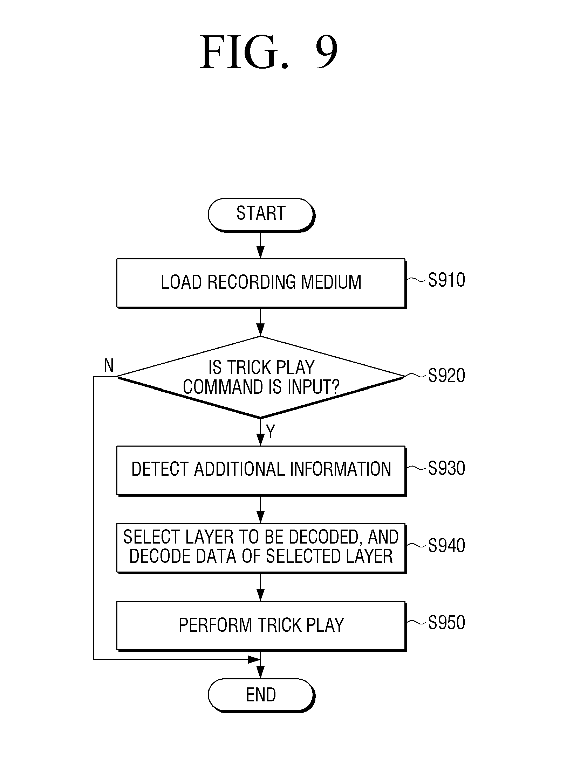

FIG. 9 is a flowchart illustrating a trick play method performed by a recording medium reproducing device according to an exemplary embodiment. Referring to FIG. 9, when a recording medium that stores video data and additional information regarding a plurality of frames classified in units of layers is loaded in the recording medium reproducing device (operation S910) and a trick play command is input thereto (operation S920), the recording medium reproducing device detects the additional information from the recording medium (operation S930).

Then, the recording medium reproducing device selects at least one layer to be decoded, based on the additional information and the trick play command, and then decodes data of the selected layer (operation S940). Although not illustrated in FIG. 9, the decoding of the selected layer may be performed only on selected video frames, that is, not all video frames of the selected layer, according to an exemplary embodiment. Then, the recording medium reproducing device performs a trick play at a trick play speed instructed in the trick play command by outputting at least a portion of the decoded data (operation S950).

An example of layers of frames included in the video data or the additional information, and a method of performing a trick play using the additional information have been described above in detail with reference to FIGs. 2 to 8, and thus, are not described here again.

As described above, the recording medium may be embodied as any of various media, such as a Blue-ray disc, a holographic disc, a DVD, a CD, a USB memory stick, an external hard disc, etc.

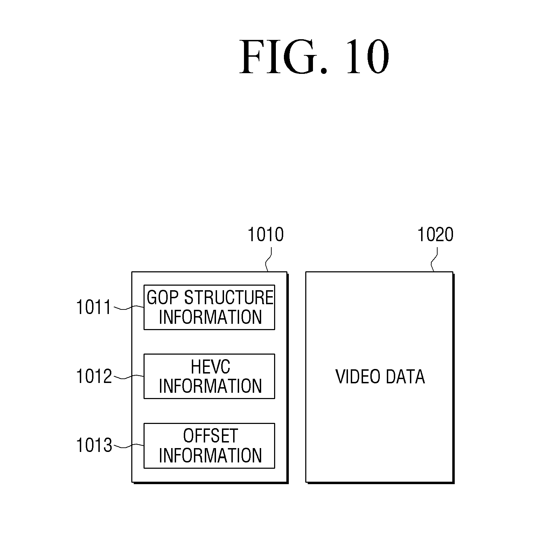

FIG. 10 is a block diagram of a structure of data stored in a recording medium, according to an exemplary embodiment. Referring to FIG. 10, the recording medium is divided into a plurality of regions 1010 and 1020. When the recording medium is an optical disc such as a Blu-ray disc, the recording medium may be divided into regions in units of a predetermined number of tracks. Video data regarding a plurality of frames classified in units of layers may be recorded in the first region 1010, and additional information may be recorded in the second region 1020.

As described above, a layer structure of frames may be variously set according to an exemplary embodiment. Although a case in which frames are classified into three layers has been described above, frames may be classified into two layers or four layers or more.

Also, the additional information recorded in the second region 1020 may include GOP structure information 1011 regarding a video frame structure of a GOP, HEVC information 1012 regarding temporal IDs determined differently for layers, and offset information 1013 for designating a location to be performed in a subsequent process. A trick play method using the additional information has been described in detail with respect to the various embodiments above, and is not described again here.

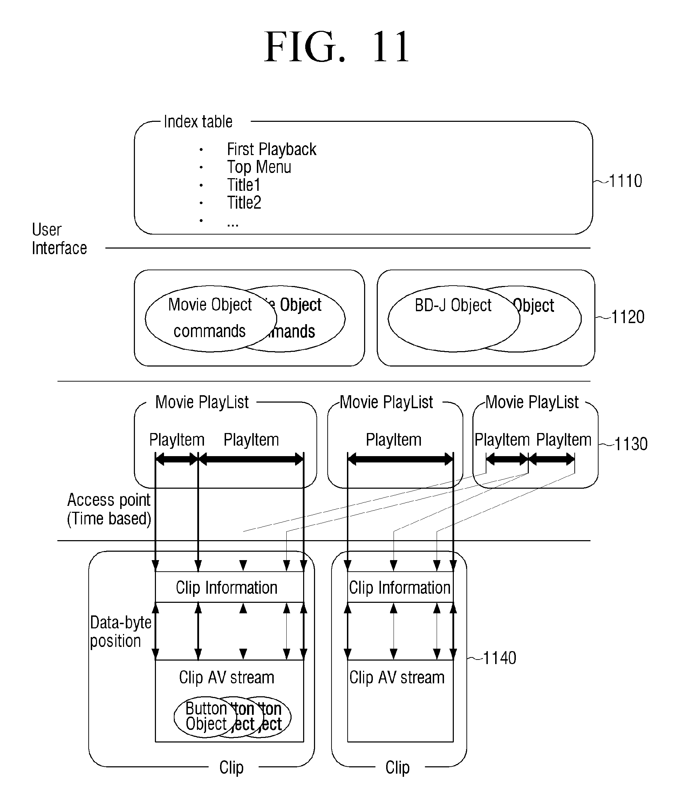

FIG. 11 is a diagram illustrating an example of a structure of data stored in a recording medium when the recording medium is embodied as a Blu-ray disc.

Referring to FIG. 11, the Blue-ray disc includes four layers, such as an index table 1110, a movie object/BD-J object 1120, a PlayList 1130, and a clip 1140.

The clip 1140 includes a clip audio/video (AV) stream file which is a video stream file, and a clip information file which is an attribute file in the form of a database associated with the clip AV stream file. The clip information file stores a time stamp for an access point. The recording medium reproducing device (Blu-ray disc) may detect a location on which a video stream is to be read, based on access point information included in the clip information file.

The PlayList is an information structure indicating an order in which bit streams used for data reproduction are to be reproduced, and consists of a plurality of Playltems. In general, a PlayList forms a content such as a movie or a drama, and a Playltem forms one chapter of the content. Playltems of a PlayList indicate the types of a video stream, an audio stream, a subtitle stream, a menu stream, etc. that are to be reproduced, and particularly, stream IDs (or stream numbers) and stream attributes of these streams. For example, the Playltems indicate stream attributes, e.g., a video format, a frame rate, and subtitles in the case of video, and language code in the case of audio.

Various types of additional information stored in the recording medium according to the above embodiments are recorded on appropriate locations on the recording medium based on attributes thereof.

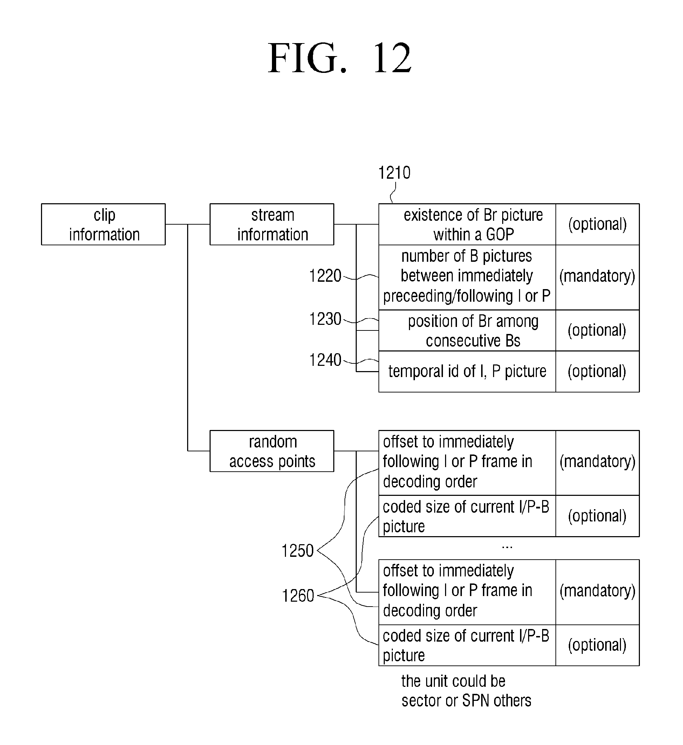

FIG. 12 is a diagram illustrating an example of a data of additional information included in clip information. Referring to FIG. 12, the clip information is divided into stream information and random access point information. GOP structure information and HEVC information are included in the stream information, and offset information is included in the random access point information.

Referring to FIG. 12, Br picture number information 1220 and an offset 1250 between an I or P frame and a next I or P frame in a decoding order may be set to be mandatory data that should be recorded, and other data 1210, 1230, and 1240 may be set to be optional data that is selectively recorded.

The temporal ID information 1240 is used to read frames and determine an I or P picture that does not need to be decoded during a high-speed trick play. Also, coding size information 1260 of a current picture is used to determine an amount of data to be read after data access is performed using an offset. When the coding size information 1260 is used, whether reading is to be performed may be determined without performing data parsing. In addition, the information 1210 indicating whether a Br picture is present in a GOP or Br picture location information 1230 may be used to precisely calculate a playback speed (that is, whether the playback speed is, for example, 2x or pseudo 2x).

In general, the structure of the GOP may not change in the entire video stream. In this case, as illustrated in FIG. 12, the GOP structure information may be displayed as a part of stream information indicating information regarding a video stream.

The offset information is information regarding I pictures and P pictures included in a stream, similar to the random access point information, and thus, may be displayed as a part of the random access point information. Although FIG. 12 illustrates that offsets for I and P frames are recorded, offsets may be indicated for only the P frames.

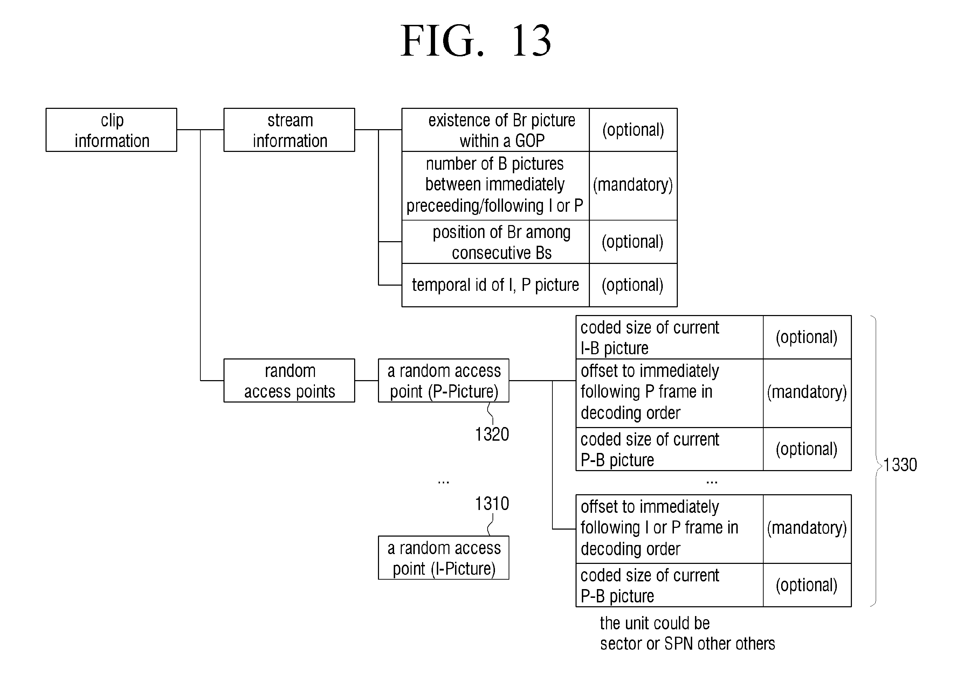

FIG. 13 is a diagram illustrating another structure of offset information, according to an exemplary embodiment. Referring to FIG. 13, GOP structure information and HEVC information are included in stream information, and offset information is included in random access point information.

When the structure of the offset information illustrated in FIG. 13 is used, I frames may be represented directly using the existing random access point information, thereby reducing a memory capacity for storing additional information.

As described above, the offset information may be represented in clip information, as a part of the random access point information, but may be inserted into a stream. In other words, if the offset information is inserted into SEI information before a GOP begins, a recording medium reproducing device may read and reproduce the offset information when a trick play is performed.

Although examples of a method of recording additional information on an assumption that a GOP does not change have been described with respect to the above embodiments, there may be a case in which the GOP changes. In this case, various types of additional information may be included in the random access point information.

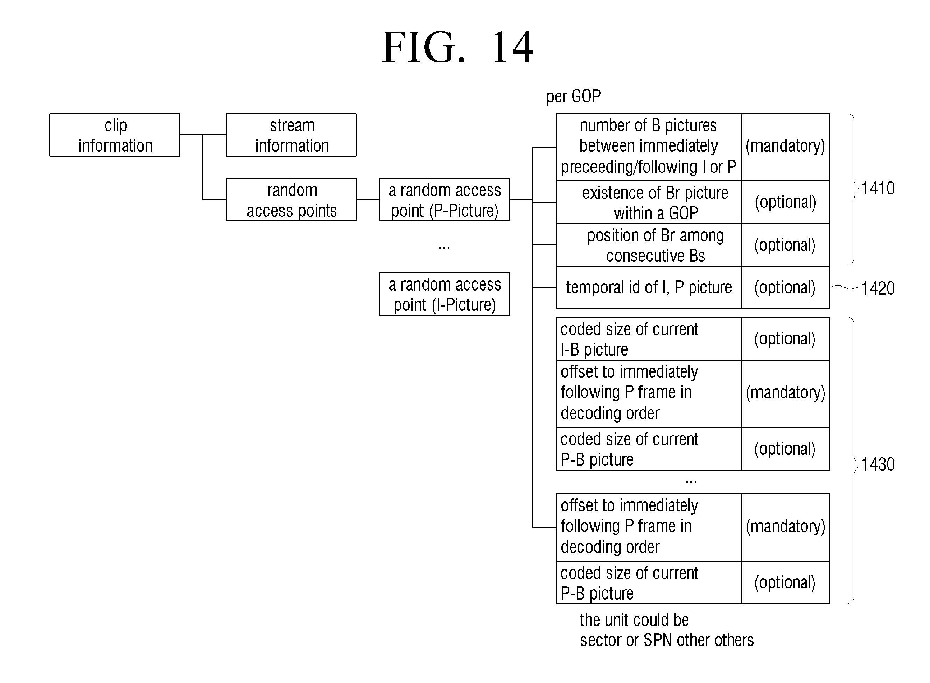

FIG. 14 is a diagram illustrating a data structure in which various types of additional information are included in random access point information, according to an exemplary embodiment. Referring to FIG. 14, the random access point information is divided into random access point information relating to I pictures and random access point information relating to P pictures. The random access point information relating to the P pictures includes GOP structure information 1410, HEVC information 1420, offset information 1430, etc., for each of GOPs.

A unit in which each of an offset and coding size information are expressed may be a byte, a source packet number (SPN), a sector, etc. Otherwise, the offset and the coding size information may be expressed in 3-sector unit that is a least common multiple of the SPN and the sector. A unit and amount of the offset information may be determined by various criteria such as content type or size.

As described above, additional information may be stored in a recording medium in various ways. A recording medium reproducing device may perform a trick play based on the additional information, as described above.

A trick play method may be performed by loading a recording medium storing a program for performing the trick play method in a recording medium reproducing device. Specifically, the program for performing the trick play method including receiving a trick play command; detecting additional information from a recording medium storing video data and the additional information regarding a plurality of frames classified in units of layers; selecting at least one layer to be decoded, based on a trick play speed designated according to a trick play command and the additional information, and decoding video data of the selected layer; and performing a trick play corresponding to the trick play speed based on the decoded data, may be stored in and provided via a non-transitory computer readable recording medium. Here, the selection of a layer to be decoded and decoding video data of the selected layer are performed with respect to video data corresponding to a duration of the trick play from among an entire video data stored in the recording medium, for example, during a period of a user's pressing a trick play button, according to an exemplary embodiment. That is, at least one layer of the video data corresponding to the duration of the trick play may be selected for decoding only when a user presses a trick play button. Also, only selected video frames among all video frames in the selected at least one layer corresponding to the duration of the trick play may be displayed.

The non-transitory computer readable recording medium means a medium capable of semi-permanently storing data and from which data can be read by devices, other than a medium capable of temporarily storing data, such as a register, a cache, and a memory. In detail, the non-transitory computer readable recording medium may be a CD, a DVD, a hard disc, a Blue-ray disc, a USB memory card, a read only memory (ROM), etc.

The foregoing exemplary embodiments and advantages are merely exemplary and are not to be construed as limiting the inventive concept. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video reproducing device comprising:
a driver configured to load a recording medium storing video data, comprising a plurality of video frames, and additional information about the plurality of video frames included in a plurality of layers, respectively, when the recording medium is loaded therein;
a user interface configured to receive a trick play command;
a video processor which processes the video data; and
a controller configured to select at least one layer to be decoded from among the plurality of layers based on a trick play speed determined according to the trick play command and the additional information, control the video processor to decode video frames of the selected layer, and performs a trick play corresponding to the trick play speed using the decoded video frames.

2. The video reproducing device of claim 1, wherein the plurality of video frames are included in a first layer comprising at least one intra (I) frame and at least one predicted (P) frame, a second layer comprising at least one bidirectional reference (Br) frame that is a bidirectional (B) frame referred to by another B frame in coding or decoding, and a third layer comprising at least one B frame which is not a Br frame.

3. The video reproducing device of claim 1 or 2, wherein the plurality of video frames are included in a first layer comprising at least one intra (I) frame and at least one predicted (P) frame, a second layer comprising another at least one P frame, and a third layer comprising at least one B frame.

4. The video reproducing device of any one of claims 1 to 3, wherein the additional information comprises information about a structure of video frames included in a group of pictures (GOP), coding information comprising information about the plurality of layers, and offset information indicating a location of the video frames to be decoded by the video processor in the plurality of video frames.

5. The video reproducing device of claim 4, wherein the information about the structure of the GOP comprises information about a bidirectional (B) frame,
wherein the coding information comprises information about at least one layer among the plurality of layers which includes at least one of an intra (I) frame and a predicted (P) frame, and
wherein the offset information comprises an offset between an I, P or B frame and a next I, P or B frame in the video frames to be decoded.

6. The video reproducing device of claim 4 or 5, wherein the recording medium is a Blu-ray disc,
wherein the video data is encoded using a high efficiency video coding (HEVC) method and is then recorded on the Blu-ray disc, and
wherein the controller detects the additional information from at least one of stream information and random access point information included in clip information recorded on the recording medium.

7. The video reproducing device of any one of claims 1 to 6, wherein the controller is further configured to select the video frames of the selected layer from among all video frames of the selected layer, and further select at least one video frame among the selected video frames of the selected layer to reproduce for the trick play according to the additional information.

8. The video reproducing device of any one of claims 1 to 7, wherein an order of decoding at least a portion of the selected video frames is different from an order of displaying the at least a portion of the selected video frames to perform the trick play.

9. The video reproducing device of any one of claims 1 to 8, an order of displaying at least a portion of the selected video frames is changed to be different from an order of decoding the at least a portion of the selected video frames, according to whether a bidirectional (B) frame or a bidirectional reference (Br) frame, which is a B frame referenced by another B frame, is included in the at least a portion of the selected video frames to be displayed to perform the trick play, in addition to an intra (I) frame or a predictive (P) frame.

10. The video reproducing device of any one of claims 1 to 9, wherein the plurality of video frames comprises at least one intra (I) frame included in a first layer, at least one predicted (P) frame included in the first layer, at least one P frame included in a second layer and two or more bidirectional (B) frames included in a third layer,
wherein the additional information comprises offset information comprising an offset between an I, P or B frame and a next I, P or B frame in the plurality of video frames,
wherein a decoding order of the video frames of the selected layer is determined according to the offset information,
wherein if the controller determines to decode a P frame in the second layer and a P frame in the third layer immediately after the P frame in the second layer according to the offset information, the controller skips decoding the P frame in the second layer.

11. A trick play method performed by a recording medium reproducing device, the method comprising:
loading a recording medium storing video data, comprising a plurality of video frames, and additional information about the plurality of video frames included in a plurality of layers, respectively, when the recording medium is loaded in a driver; receiving a trick play command;
detecting the additional information;
selecting at least one layer to be decoded from among the plurality of layers based on a trick play speed determined according to the trick play command and the additional information, and decoding video frames of the selected layer; and
performing a trick play corresponding to the trick play speed using the decoded video frames.

12. The trick play method of claim 11, wherein the plurality of video frames are included in a first layer comprising at least one intra (I) frame and at least one predicted (P) frame, a second layer comprising at least one bidirectional reference (Br) frame that is a bidirectional (B) frame referred to by another B frame in coding or decoding, and a third layer comprising at least one B frame which is not a Br frame.

13. The trick play method of claim 11 or 12, wherein the plurality of video frames are included in a first layer comprising at least one intra (I) frame and at least one predicted (P) frame, a second layer comprising another at least one P frame, and a third layer comprising at least one B frame.

14. The trick play method of any one of claims 11 to 13, wherein the additional information comprises information about a structure of a group of pictures (GOP) including the plurality of video frames, coding information comprising information about the plurality of layers, and offset information indicating a location of the video frames to be decoded in the plurality of video frames.

15. The trick play method of claim 14, wherein the information about the structure of the GOP comprises information about a bidirectional (B) frame,
wherein the coding information comprises information about at least one layer among the plurality of layers which includes at least one of an intra (I) frame and a predicted (P) frame, and
wherein the offset information comprises an offset between an I, P or B frame and a next I, P or B frame in the video frames to be decoded.
